# EUROPÄISCHE PATENTSCHRIFT

(11) **EP 3 251 487 B1**
(45) Veröffentlichungstag und Bekanntmachung des Hinweises auf die Patenterteilung: **10.04.2019**
(21) Anmeldenummer: 17401053.8
(22) Anmeldetag: 23.05.2017
(51) Int. Cl.: A01C 21/00, A01B 79/00

(54) **VERFAHREN UND VORRICHTUNG ZUR STEUERUNG EINER LANDWIRTSCHAFTLICHEN VERTEILMASCHINE**
METHOD AND DEVICE FOR CONTROLLING AN AGRICULTURAL DISTRIBUTION MACHINE
PROCÉDÉ ET DISPOSITIF DESTINÉS À LA COMMANDE D'UN ÉPANDEUR AGRICOLE

(30) Priorität: 01.06.2016 DE 102016110090
(43) Veröffentlichungstag der Anmeldung: 06.12.2017
(73) Patentinhaber: Amazonen-Werke H. Dreyer GmbH & Co. KG, 49205 Hasbergen (DE)
(72) Erfinder: Grosenik, Rainer, 27777 Bergedorf (DE); Bardroff, Alexander, 26127 Oldenburg (DE)

(56) Entgegenhaltungen:
- EP-B1- 2 342 963
- US-A1- 2014 002 489

## Beschreibung

Die Erfindung betrifft ein Verfahren zur Steuerung einer landwirtschaftlichen Verteilmaschine gemäß dem Oberbegriff des Anspruchs 1. Darüber hinaus betrifft die Erfindung ein Computerprogrammprodukt gemäß dem Oberbegriff des Anspruchs 13. Schließlich betrifft die Erfindung eine Vorrichtung zur Steuerung einer landwirtschaftlichen Verteilmaschine gemäß dem Oberbegriff des Anspruchs 14.

Bei den hier angesprochenen Verteilmaschinen handelt es sich insbesondere um Sämaschinen. Es kommen aber beispielsweise auch Feldspritzen, Düngerstreuer und ähnliches in Betracht. Landwirtschaftliche Verteilmaschinen dienen allgemein dazu, das jeweilige landwirtschaftliche Verteilgut, wie beispielsweise Saatgut, Dünger oder ähnliches, auf dafür vorgesehene Flächen zu verteilen. Dabei können Parameter, wie die Bodenbeschaffenheit, die Nachbarschaft zu Gewässern oder ähnlichem, lokale Eigenarten der Witterung und ähnliches berücksichtigt werden.

Zur Entlastung des jeweiligen Bedieners und zur Sicherstellung einer hohen und gleichbleibenden Qualität wird bei landwirtschaftlichen Maschinen in zunehmendem Maße das sich bietende Automatisierungspotential genutzt. So können insbesondere Navigationssysteme zur Optimierung des Befahrens der zu bearbeitenden Flächen verwendet werden. Dabei können gerade die oben angesprochenen Parameter wenigstens teilweise automatisiert anhand entsprechender Datenbestände berücksichtigt werden.

Aus der EP 2 342 963 B1 ist ein spezielles Verfahren zum Verteilen von Saatgut auf einem landwirtschaftlichen Feld bekannt, bei dem mittels Positionsbestimmung eine Automatisierung erfolgt. Bei diesem Steuerungsverfahren erfolgt ein Befahren der Feldgrenzen zum Abschluss des Ausbringvorganges, um unerwünschtes Verdichten und Verschieben von Boden und Saatgut im Vorgewende zu verhindern.

Die US 2014 0 002 489 A1 beschreibt ein vorheriges Einmessen der Feldgrenzen durch deren Abfahren. Die genauen Feldgrenzen müssen unter anderem zur Optimierung des Ausbringvorganges und zum Ausgleich beispielsweise von Drifteffekten bei der satellitengestützten Navigation erfasst werden.

In der Spezifikation von Busprotokollen zur Kommunikation landwirtschaftlicher Maschinen untereinander, wie insbesondere ISOBUS, sind aber Fahrten zur Einmessung der Feldgrenzen ohne Ausgabe von Verteilgut nicht vorgesehen. Daher kann dies nur in aufwändiger Weise mittels separater Navigationsgeräte, durch separate Fahrten mit manuell deaktivierter Ausbringung von Verteilgut und manueller Löschung der Spuren oder auch durch externe Dienstleister erfolgen.

Die Aufgabe der vorliegenden Erfindung besteht daher darin, zumindest ein Verfahren und eine Vorrichtung anzugeben, die die vorbeschriebenen Nachteile beseitigen. Insbesondere soll die Tätigkeit für den jeweiligen Bediener erleichtert werden.

Ein Verfahren zur Steuerung einer landwirtschaftlichen Verteilmaschine mit den Merkmalen des Anspruchs 1 löst diese Aufgabe. Die Feldgrenzen werden dabei als Positionsdaten zur Steuerung des Ausbringens des Verteilguts verwendet. Das Verfahren zeichnet sich dadurch aus, dass die Positionsdaten der Feldgrenzen in einem Aufzeichnungsmodus der Steuerungseinrichtung erfasst werden. Damit wird erreicht, dass möglichst genaue Daten für das Befahren der landwirtschaftlichen Fläche vorliegen, um das Verteilgut optimal ausbringen zu können. Die Feldgrenzen werden im Aufzeichnungsmodus ohne Ausbringen landwirtschaftlichen Verteilguts erfasst. Damit wird der erfindungsgemäße Zweck der Verwendung der Verteilmaschine zum Vermessen des landwirtschaftlichen Fläche beziehungsweise zur Ermittlung der Feldgrenzen in besonders günstiger Weise erreicht.

Im Aufzeichnungsmodus wir vorzugsweise die tatsächliche Ausbringrate des landwirtschaftlichen Verteilguts auf Null reduziert wird. Damit wird kein Verteilgut ausgebracht. Weiter vorzugsweise erfolgt dies durch Deaktivierung der tatsächlichen Dosierung des Verteilguts. Damit wird alleine durch Aktivieren des Aufzeichnungsmodus erreicht, dass die Maschine alle erforderlichen Schritte zur Ermittlung der Feldgrenzen erledigt.

Vorzugsweise werden die Positionsdaten der Feldgrenzen im Aufzeichnungsmodus aufgezeichnet und/oder abgespeichert. In diesem Modus lassen sich speziell geeignete Einstellungen der Verteilmaschine für die Datenaufnahme vorgeben.

Die Positionsdaten der Feldgrenzen werden im Aufzeichnungsmodus vorzugsweise durch Abfahren der Feldgrenzen der landwirtschaftlichen Fläche erfasst. Damit lassen sich die aktuellen Positionsdaten während des Abfahrens aufzeichnen, um so die Feldgrenzen als Kontur der landwirtschaftlichen Fläche zu ermitteln. Durch eine insbesondere kontinuierliche oder quasi-kontinuierliche Aufzeichnung lässt sich eine hohe Genauigkeit sicherstellen.

Vorzugsweise werden die Positionsdaten der Feldgrenzen im Aufzeichnungsmodus durch Abfahren zumindest eines Randbereichs der zu bearbeitenden Fläche erfasst. Der Randbereich ist dabei insbesondere Teil der zu bearbeitenden Fläche. Sofern die Maschine innerhalb der Feldgrenzen fährt, ist gegebenenfalls der Abstand des Positionssensors an der Maschine zur tatsächlichen Feldgrenze zu berücksichtigen. Sofern die Verteilmaschine mit dem Positionssensor genau auf der Feldgrenze fährt, sind keine seitlichen Abstände zu berücksichtigen.

In einer vorteilhaften Weiterbildung der Erfindung ist die Steuerungseinrichtung zum automatischen Anlegen von Fahrgassen ausgebildet und werden in dem Aufzeichnungsmodus die abgefahrene Strecke und/oder die erfassten Positionsdaten nicht bei der Ermittlung der folgend anzulegenden Fahrgassen berücksichtigt. Hierdurch wird sichergestellt, dass die anzulegenden Fahrgassen in optimaler Weise und unbeachtlich der in dem Aufzeichnungsmodus abgefahrenen Strecke oder angefahrenen Positionen angelegt werden können. Die im Aufzeichnungsmodus ermittelten Positionsdaten werden insbesondere beim Deaktivieren des Aufzeichnungsmodus als Feldgrenzen gespeichert. Diese automatische Speicherung, vorzugsweise unmittelbar durch die Steuerungseinrichtung, ermöglicht eine besonders benutzerfreundliche Steuerung der Verteilmaschine.

Beim Deaktivieren des Aufzeichnungsmodus werden die im Aufzeichnungsmodus ermittelten Positionsdaten vorzugsweise als noch nicht bearbeitete Fläche und/oder als noch zu bearbeitende Fläche behandelt. Damit wird erreicht, dass die Flächen nach wie vor als unbearbeitet gelten und noch bearbeitet werden können, auch in automatisierter Weise.

Vorzugsweise werden die im Aufzeichnungsmodus ermittelten Positionsdaten als bereits bearbeitete Fläche verworfen, um ein erneutes Befahren bei deaktiviertem Aufzeichnungsmodus zu ermöglichen und landwirtschaftliches Verteilgut auszubringen. Ein automatisches Verwerfen beziehungsweise Löschen der Bearbeitungsdaten bringt die Verteilmaschine entsprechend in einen Zustand eines unbearbeiteten Feldes. Gleichzeitig werden aber vorzugsweise die erfassten Feldgrenzen gespeichert.

Im Aufzeichnungsmodus kann vorzugsweise wenigstens ein Referenzpunkt der Positionsdaten festgelegt werden, vorzugsweise mehrere Referenzpunkte. Diese können für spätere Fahrten als Anhaltspunkte beziehungsweise Startpunkte dienen, beispielsweise an charakteristischen Landschaftspunkten oder Landmarken, wie Strommasten. Auch können derartige Referenzpunkt zu anderen Zeitpunkten unabhängig vom Aufzeichnungsmodus gesetzt werden.

Insbesondere werden die Positionsdaten im Aufzeichnungsmodus durch Erfassung lokaler Positionssignale, insbesondere RTK-Signale, und/oder satellitengestützter Positionssignale, insbesondere GPS-Signale, ermittelt. Damit lassen sich Positionsdaten aus einer oder mehrerer Quellen nutzen, um die Feldgrenzen in möglichst hohe Genauigkeit zu ermitteln.

Elektronische Kartendaten können vorzugsweise in die Ermittlung der Positionsdaten im Aufzeichnungsmodus einbezogen werden. Diese Kartendaten können bereits vorliegen und/oder durch eine Ermittlung von Feldgrenzen in der erfindungsgemäßen Art und Weise ermittelt werden. Eine Speicherung der Kartendaten und/oder Feldgrenzen kann lokal an der Verteilmaschine, in einem dezentralen und/oder auch zentralen Speicher erfolgen. Hier kommen insbesondere Rechenzentren, Cloudlösungen und ähnliches in Betracht.

Die Erfindung verfügt die Steuerungseinrichtung zusätzlich zu dem Aufzeichnungsmodus über einen Bearbeitungsmodus, in dem die Positionsdaten nur dann aufgezeichnet werden, wenn durch ein Stellungssignal der Verteilmaschine die Bearbeitung, insbesondere die Verteilung des Verteilguts, angezeigt ist, während in dem Aufzeichnungsmodus durch die Steuerungseinrichtung kein Stellungssignal zur Aufzeichnung der Positionsdaten abgefragt wird. Hierdurch wird sichergestellt, dass in dem Bearbeitungsmodus die bearbeitete Fläche nur dann aufgezeichnet wird, wenn auch tatsächlich Verteilgut auf dem Boden ausgebracht wird. Demgegenüber soll im Aufzeichnungsmodus eine solche Abfrage gerade nicht erfolgen, da in diesem Modus in der Regel kein Verteilgut ausgebracht wird.

Die eingangs genannte Aufgabe wird auch gelöst durch ein Computerprogrammprodukt gemäß Anspruch 13, nämlich vorzugsweise zur Durchführung des Verfahrens nach den obigen Beschreibungen. Ein derartiges Computerprogrammprodukt beziehungsweise eine Software kann als Computerprogramm, als sogenannte App, als Skript oder ähnliches ausgebildet sein. Es kann insbesondere auf einer Steuerungseinrichtung einer landwirtschaftlichen Verteilmaschine oder einem mit dieser verbundenem Traktor, einem Terminal an der Verteilmaschine oder einem die Verteilmaschine tragenden oder ziehenden Traktor aber auch einem Handcomputer, einem tragbaren Computer, einem Mobiltelefon, einem Zentralcomputer, einem Cloudcomputer oder anderen geeigneten Systemen ablaufen.

Die eingangs genannte Aufgabe wird außerdem gelöst durch eine Vorrichtung zur Steuerung einer landwirtschaftlichen Verteilmaschine mit den Merkmalen des Anspruchs 14. Bei der Vorrichtung handelt es sich um eine Steuerungseinrichtung und/oder Bordelektronik und/oder ein Terminal für eine landwirtschaftliche Verteilmaschine, insbesondere für eine Sämaschine, einen Düngerstreuer oder ähnliches. Die Vorrichtung ist zur Ausführung des oben beschriebenen Verfahrens und/oder des oben beschrieben Computerprogrammprodukts ausgebildet.

Die Vorrichtung weist vorzugsweise wenigstens ein Bedienelement beziehungsweise Schaltelement zur Aktivierung und/oder Deaktivierung des Aufzeichnungsmodus auf. Das Bedienelement beziehungsweise Schaltelement ist insbesondere als hardwareseitig und/oder softwareseitig belegbarer Schalter ausgebildet. Damit lässt sich der Aufzeichnungsmodus benutzerseitig aktivieren und/oder deaktivieren.

Ein bevorzugtes Ausführungsbeispiel der Erfindung wird im Folgenden anhand der Zeichnungen näher beschrieben. In diesen zeigen:
- Fig. 1: eine landwirtschaftliche Verteilmaschine auf einer landwirtschaftlichen Fläche im Aufzeichnungsmodus,
- Fig. 2: die landwirtschaftliche Verteilmaschine auf der landwirtschaftlichen Fläche beim Ausbringen des landwirtschaftlichen Verteilguts,
- Fig. 3: eine Bedieneinheit einer erfindungsgemäßen Steuerungseinrichtung, und
- Fig. 4: eine beispielhafte Bildschirmanzeige einer erfindungsgemäßen Steuerungseinrichtung.

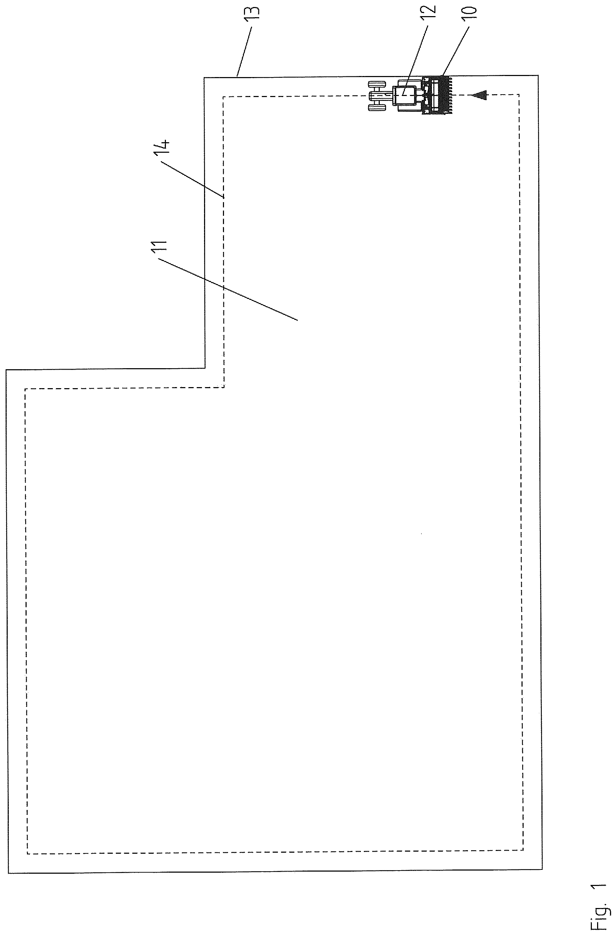

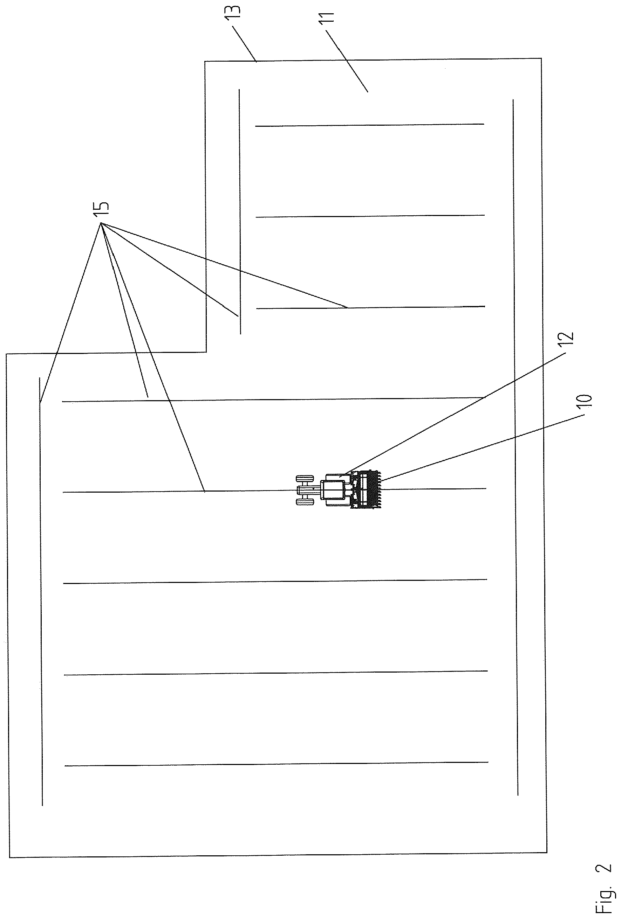

In den Figuren 1 und 2 ist jeweils eine landwirtschaftliche Verteilmaschine 10 gezeigt, die sich auf einer landwirtschaftlichen Fläche 11 befindet. Bei einer derartigen Fläche 11 kann es sich insbesondere um einen Acker handeln. Bei der hier gezeigten Verteilmaschine 10 handelt es sich um eine Sämaschine, die man an einem Zugfahrzeug 12, wie beispielsweise einem Schlepper oder Trecker befestigt oder auch angehängt sein kann. Es kann sich beispielsweise aber auch um Düngerstreuer, Feldspritzen und Ähnliches handeln.

Bei derartigen landwirtschaftlichen Verteilmaschinen 10 wird in zunehmendem Maße Computertechnik zur Sicherstellung hoher landwirtschaftlicher Erträge einerseits und zur Entlastung der Bediener andererseits eingesetzt. Insbesondere werden Hilfestellungen durch computergestützte Navigation in zunehmendem Maße eingesetzt. Hierbei kommen satellitengestützte Navigation, insbesondere GPS-Systeme (Global Positioning System) und ähnliche Systeme, aber auch RTK-Systeme (Real Time Kinematic) als Systeme zur bodengebundenen Verbesserung der Satellitennavigation in Betracht.

Um ein computer- beziehungsweise navigationsgestütztes Abfahren der landwirtschaftlichen Fläche 11 zu ermöglichen, ist es erforderlich, zumindest die Positionsdatengrenzen sogenannter Feldgrenzen 13 zu kennen, also der Konturen beziehungsweise der Erstreckung der Fläche 11. Diese Feldgrenzen 13 ergeben sich in der Regel auf Grund der äußeren Form der zu bearbeitenden Fläche 11. Es können selbstverständlich aber auch Aussparungen, freie Bereiche und Ähnliches in einer realen Fläche 11 auftreten, die durch die Landschaft vorgegeben sind.

Um die Feldgrenzen 13 einer Fläche 11 zu ermitteln, kann die Verteilmaschine 10 entlang eines Randbereichs 14 der landwirtschaftlichen Fläche 11 bewegt werden. Dies kann in üblicher Weise nur mit eingeschalteter Verteileinrichtung der Verteilmaschine 10 erfolgen, da nur in diesem Fall eine Aufzeichnung der Positionsdaten erfolgt.

Aufgrund der ermittelten Positionsdaten nach erfolgreichem Abfahren der Feldgrenzen 13 kann nunmehr ein Abfahren der Fläche 11 erfolgen, wie dies beispielsweise in der Fig. 2 gezeigt ist. Dort sind exemplarisch einige Fahrspuren 15 dargestellt, entlang derer die Verteilmaschine 10 die landwirtschaftliche Fläche 11 abfährt. Dabei kann, beispielsweise in einem Bearbeitungsmodusein gezieltes Ausbringen des Verteilguts anhand lokaler Parameter erfolgen.

Zur Steuerung der Verteilmaschine 10 dient eine hier nicht im Detail dargestellte Steuerungseinrichtung, die anhand der aktuellen Positionsdaten und der vorgegebenen Positionsdaten der Feldgrenzen 13 für eine optimierte Befahrung der landwirtschaftlichen Fläche 11 sorgt.

Erfindungsgemäß wird allerdings das Abfahren der Feldgrenzen 13 in einem Aufzeichnungsmodus der entsprechenden, am Zugfahrzeug 12 oder an der Verteilmaschine 10 vorgesehenen Steuerungseinrichtung beziehungsweise Bordelektronik vorgenommen. In diesem Aufzeichnungsmodus wird die Ausbringrate der landwirtschaftlichen Verteilmaschine automatisch auf Null reduziert beziehungsweise die Verteilung unterbrochen, um so lediglich eine Aufzeichnung der Positionsdaten der Feldgrenzen 13 durchführen zu können.

Der Aufzeichnungsmodus bietet dabei den Vorteil, dass durch Einschalten desselben automatisch sowohl das Ausbringen des entsprechenden landwirtschaftlichen Verteilguts unterbunden wird als auch eine Speicherung der aufgenommenen Positionsdaten als Feldgrenzen 13 erfolgt. Anhand dieser Daten kann dann zukünftig eine entsprechende Bewirtschaftung der landwirtschaftlichen Fläche 11 erfolgen.

Insbesondere gegenüber einer Vorgehensweise, bei der manuell die Ausbringrate reduziert werden muss, bietet dieses Verfahren erhebliche Vorteile. Die Aufnahme der Feldgrenzen 13 kann auf einfache Weise ohne manuellen Eingriff in die Maschine erfolgen.

Dies gilt insbesondere im Hinblick auf die Kommunikation landwirtschaftlicher Maschinen untereinander über spezielle Bussysteme, wie beispielsweise dem ISOBUS-Standard. Dabei ist insbesondere nicht vorgesehen, Positionsdaten aufzunehmen, wenn kein Ausbringen landwirtschaftlichen Verteilguts erfolgt. Umgekehrt werden somit Positionsdaten nur dann aufgenommen, wenn auch ein Ausbringen landwirtschaftlichen Verteilguts auf die Fläche 11 erfolgt.

Damit werden erfindungsgemäß zwar die Positionsdaten im Aufzeichnungsmodus aufgenommen und als Feldgrenzen 13 abgespeichert. Anschließend werden allerdings die Positionsdaten, die im Aufzeichnungsmodus gewonnen wurden, wieder gelöscht. Somit kommt es nicht zu einem doppelten Befahren einzelner Flächenabschnitte einerseits und andererseits auch nicht zu einem versehentlichen Aussparen einzelner Flächenbereiche.

Weitere Automatisierungsschritte erfolgen in einem Bearbeitungsmodus, indem beispielsweise Fahrgassen automatisch nach einer festgelegten Anzahl von Fahrspuren angelegt werden oder ein Ausbringen von Verteilgut in dem Bearbeitungsmodus nur erfolgt, falls ein Stellungssignal der Verteilmaschine einen vorgegebenen Wert annimmt oder überschreitet oder unterschreitet. Hierfür kann beispielsweise die Stellung der Verteilmaschine an einer Dreipunktkupplung abgefragt werden oder die Stellung bestimmter Komponenten der Verteilmaschine ermittelt werden, beispielsweise ob eine geklappte Verteilmaschine, auch Feldspritze, ausgeklappt ist. Die Stellung der Verteilmaschine kann auch indirekt abgefragt werden, beispielsweise indem eine Drehung von sich während der Verteilung auf dem Boden befindlicher Räder ermittelt wird. Auch können elektronische Stellsignale berücksichtigt werden, beispielsweise ob ein Dosiermotor der Verteilmaschine aktiviert ist oder ein Dosierschieber bei einer Sämaschine oder einem Düngerstreuer eine vorgesehene Stellung erreicht oder überschritten hat.

Diese Automatisierungsschritte bleiben für den Aufzeichnungsmodus unberücksichtigt, da ansonsten unerwünschterweise die Fahrgassen bereits beim Aufzeichnen oder Abfahren der Feldgrenze angelegt werden oder eine Aufzeichnung der Feldgrenze wegen eines nicht vorliegenden Stellungssignals erst gar nicht vorgenommen werden kann.

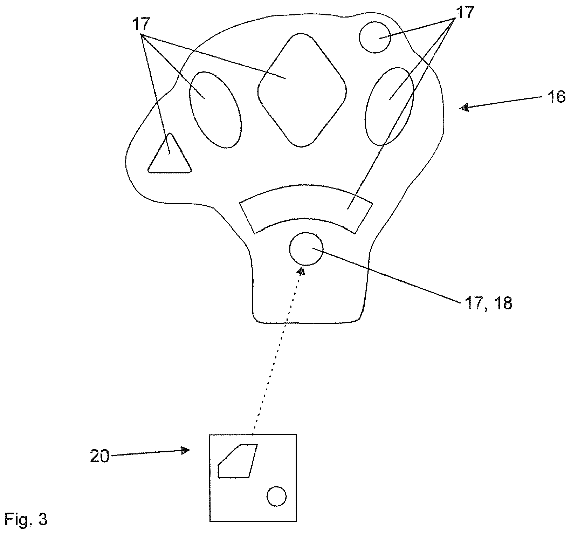

Zur Aktivierung beziehungsweise Deaktivierung des Aufzeichnungsmodus kann beispielsweise ein spezieller Schalter oder Taster vorgesehen sein. Dies ist insbesondere in der Fig. 3 für eine entsprechende Bedieneinheit 16 gezeigt.

Die Bedieneinheit 16 dient dabei in üblicher Weise zur Bedienung der entsprechenden Steuerungseinheit an der Verteilmaschine 10 beziehungsweise am Zugfahrzeug 12. Dazu sind mehrere Bedienelemente 17, beispielsweise als Bedientaster oder Bedienschalter, an der Bedieneinheit 16 ausgebildet. Die Bedieneinheit 16 kann dazu beispielsweise als Handgerät oder Steuerknüppel ausgebildet sein. Eines der Bedienelemente 17 ist dabei als Bedientaster 18 zum Aktivieren beziehungsweise Deaktivieren des Aufzeichnungsmodus ausgebildet. Dieser kann auch durch die Steuerungseinrichtung frei belegbar sein. Mit anderen Worten kann also durch eine spezielle Menüführung der Steuerungseinrichtung einem Bedienelement 18 eine spezielle Funktion, hier das Starten und/oder Stoppen des Aufzeichnungsmodus zugewiesen werden.

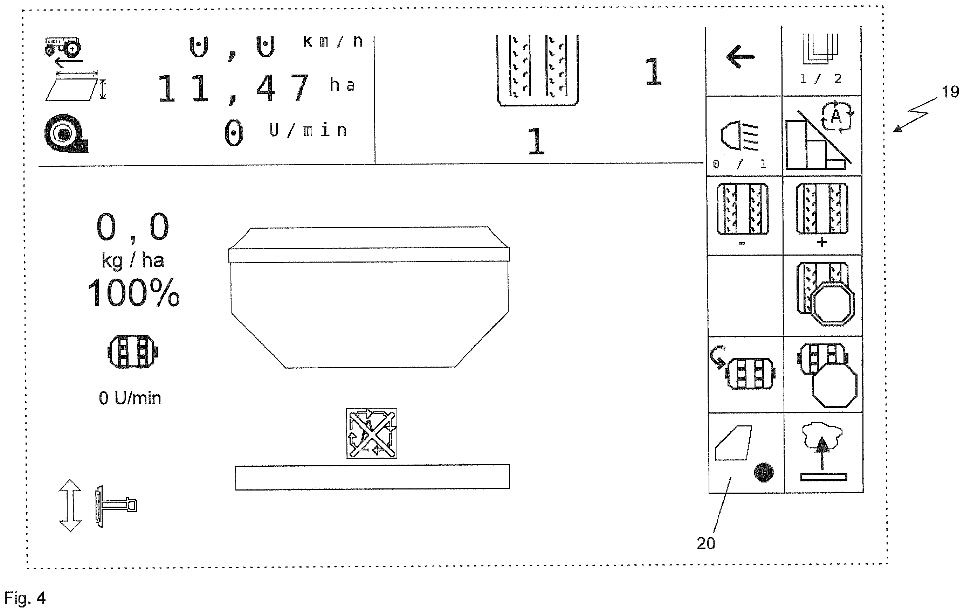

Mit Hilfe eines entsprechenden Bildschirms beziehungsweise einer Anzeigeeinheit 19, wie diese ausschnittsweise in der Fig. 4 gezeigt ist, kann der aktuelle Status der Steuerungseinheit beziehungsweise der Verteilmaschine 10 überwacht werden. Durch Signalisierung an der Anzeigeeinheit 19 kann die Aktivierung beziehungsweise Deaktivierung des Aufzeichnungsmodus visuell kontrolliert werden. Hierzu kann beispielsweise ein entsprechendes Piktogramm 20 vorgesehen sein, wie es in Fig. 3 eingeblendet ist oder auch in Fig. 4 zu sehen ist. Das Piktogramm 20 wird dazu in die Anzeigeeinheit 19 eingeblendet oder dort hervorgehoben, solange der Aufzeichnungsmodus aktiviert ist. Bei Deaktivierung wird es entsprechend entfernt oder die Hervorhebung beseitigt. Alternativ kann auch ein Hinweis eingeblendet werden, dass der Aufzeichnungsmodus aktiv ist. Das Bedienelement 18 kann sich auch direkt an der Steuerungseinrichtung oder der Anzeigeeinheit 19 befinden. Beispielsweise kann der Bildschirm Teil eines Terminals sein, an dem zusätzliche Softkeys vorhanden sind. Auch kann die Anzeigeeinheit 19 berührungsempfindlich ausgestaltet sein und das Bedienelement 18 als Element 20 ein Teil der Anzeigeeinheit sein.

Darüber hinaus kann gegebenenfalls noch eine Bestätigung beim Bediener angefordert werden, wenn die Aufzeichnung der Feldgrenzen 13 im Aufzeichnungsmodus vollständig erfolgt ist. Eine Übernahme der Positionsdaten als Feldgrenzen 13 in den Datenbestand beispielsweise der Steuerungseinrichtung oder auch eines anderen Datenspeichers kann so bestätigt werden.

Das erfindungsgemäße Verfahren läuft wie folgt:
An einem vom Bediener der Verteilmaschine 10 beziehungsweise des Zugfahrzeugs 12 festgelegten Startpunkt an der zu vermessenden Fläche 11 wird der Aufzeichnungsmodus durch den Bediener aktiviert. Hierzu kann er insbesondere den Bedienschalter 18 oder 20 für den Aufnahmemodus betätigen.

Durch Aktivierung des Aufzeichnungsmodus wird die Aufzeichnung von Positionsdaten begonnen. Gegenüber dem Bussystem wird dazu ein Ausbringen von Ausbringgut simuliert, indem die tatsächliche Ausbringmenge auf Null reduziert wird. Somit wird während der Aktivierung des Aufzeichnungsmodus kein Ausbringgut auf die Fläche 11 gebracht.

Während der Bediener der Verteilmaschine 10 beziehungsweise der Fahrer des Zugfahrzeugs 12 nunmehr die Feldgrenzen 13 abfährt, typischerweise entlang des Randbereichs 14, zeichnet die Steuerungseinrichtung die Positionsdaten auf. Damit werden schließlich die Feldgrenzen 13 der landwirtschaftlichen Fläche 11 aufgezeichnet.

Es kann vorgesehen sein, während der Aufzeichnungsmodus aktiviert ist, dass die Anzeigeeinheit 19 das Piktogramm 20 überhaupt erst anzeigt oder zumindest in hervorgehobener Weise darstellt. Damit wird der Bediener auf den aktivierten Aufzeichnungsmodus hingewiesen.

Insbesondere durch erneutes Betätigen des Bedienschalters 18 oder 20 für den Aufnahmemodus kann der Bediener diesen deaktivieren. Dann wird die Aufzeichnung von Positionsdaten gestoppt.

Gegebenenfalls kann die Steuerungseinheit nunmehr vom Bediener eine Bestätigung anfordern, dass die Positionsdaten als Feldgrenzen 13 übernommen werden sollen. Damit können die Daten für die weitere Verwendung bestätigt oder abgelehnt werden. Anhand der entsprechenden neuen Feldgrenzen 13 kann dann ein Abfahren der Fläche 11 erfolgen.

### Bezugszeichen

- 10: landwirtschaftliche Verteilmaschine
- 11: landwirtschaftliche Fläche
- 12: Zugfahrzeug
- 13: Feldgrenze
- 14: Randbereich
- 15: Fahrspur
- 16: Bedieneinheit
- 17: Bedienschalter
- 18: Bedienschalter für Aufnahmemodus
- 19: Anzeigeeinheit
- 20: Piktogramm

## Patentansprüche

1. Verfahren zur Steuerung einer landwirtschaftlichen Verteilmaschine (10), insbesondere Sämaschine, wobei die Verteilmaschine (10) zum Ausbringen eines landwirtschaftlichen Verteilguts, insbesondere Saatguts, auf einer landwirtschaftlichen Fläche (11) vorgesehen ist und wobei Feldgrenzen (13) der landwirtschaftlichen Fläche (11) als Positionsdaten zur Steuerung des Ausbringens des Verteilguts verwendet werden, wobei die Positionsdaten der Feldgrenzen (13) in einem Aufzeichnungsmodus einer Steuerungseinrichtung der Verteilmaschine (10) erfasst werden, wobei im Aufzeichnungsmodus die tatsächliche Ausbringrate des landwirtschaftlichen Verteilguts auf Null reduziert wird, vorzugsweise durch Deaktivierung der tatsächlichen Dosierung des Verteilguts,
**dadurch gekennzeichnet, dass**
in einem Bearbeitungsmodus der Steuerungseinrichtung die Positionsdaten nur dann aufgezeichnet werden, wenn durch ein Stellungssignal der Verteilmaschine die Bearbeitung, insbesondere die Verteilung des Verteilguts, angezeigt ist, während in dem Aufzeichnungsmodus durch die Steuerungseinrichtung kein Stellungssignal zur Aufzeichnung der Positionsdaten abgefragt wird.

2. Verfahren nach Anspruch 1, **dadurch gekennzeichnet, dass** die Positionsdaten der Feldgrenzen (13) im Aufzeichnungsmodus aufgezeichnet und/oder abgespeichert werden.

3. Verfahren nach Anspruch 1 oder 2, **dadurch gekennzeichnet, dass** die Positionsdaten der Feldgrenzen (13) im Aufzeichnungsmodus durch Abfahren der Feldgrenzen (13) der landwirtschaftlichen Fläche (11) erfasst werden.

4. Verfahren nach einem der vorhergehenden Ansprüche, **dadurch gekennzeichnet, dass** die Positionsdaten der Feldgrenzen (13) im Aufzeichnungsmodus durch Abfahren zumindest eines Randbereichs (14) der zu bearbeitenden Fläche erfasst werden, wobei der Randbereich (14) insbesondere Teil der zu bearbeitenden Fläche ist.

5. Verfahren nach einem der vorhergehenden Ansprüche, **dadurch gekennzeichnet, dass** die Feldgrenzen (13) im Aufzeichnungsmodus ohne Ausbringen landwirtschaftlichen Verteilguts erfasst werden.

6. Verfahren nach einem der vorhergehenden Ansprüche, **dadurch gekennzeichnet, dass** die Steuerungseinrichtung zum automatischen Anlegen von Fahrgassen ausgebildet ist und in dem Aufzeichnungsmodus die abgefahrene Strecke und/oder die erfassten Positionsdaten nicht bei der Ermittlung der folgend anzulegenden Fahrgassen berücksichtigt werden.

7. Verfahren nach einem der vorhergehenden Ansprüche, **dadurch gekennzeichnet, dass** die im Aufzeichnungsmodus ermittelten Positionsdaten beim Deaktivieren des Aufzeichnungsmodus als Feldgrenzen (13) gespeichert werden.

8. Verfahren nach einem der vorhergehenden Ansprüche, **dadurch gekennzeichnet, dass** beim Deaktivieren des Aufzeichnungsmodus die im Aufzeichnungsmodus ermittelten Positionsdaten als noch nicht bearbeitete Fläche (11) und/oder als noch zu bearbeitende Fläche (11) behandelt werden.

9. Verfahren nach einem der vorhergehenden Ansprüche, **dadurch gekennzeichnet, dass** die im Aufzeichnungsmodus ermittelten Positionsdaten als bereits bearbeitete Fläche (11) verworfen werden, um ein erneutes Befahren bei deaktiviertem Aufzeichnungsmodus zu ermöglichen zum Ausbringen des landwirtschaftlichen Verteilguts.

10. Verfahren nach einem der vorhergehenden Ansprüche, **dadurch gekennzeichnet, dass** im Aufzeichnungsmodus wenigstens ein Referenzpunkt der Positionsdaten festgelegt wird, vorzugsweise mehrere Referenzpunkte.

11. Verfahren nach einem der vorhergehenden Ansprüche, **dadurch gekennzeichnet, dass** die Positionsdaten im Aufzeichnungsmodus durch Erfassung lokaler Positionssignale, insbesondere RTK-Signale, und/oder satellitengestützter Positionssignale, insbesondere GPS-Signale, ermittelt werden.

12. Verfahren nach einem der vorhergehenden Ansprüche, **dadurch gekennzeichnet, dass** elektronische Kartendaten in die Ermittlung der Positionsdaten im Aufzeichnungsmodus einbezogen werden.

13. Computerprogrammprodukt umfassend Befehle, die bewirken, dass die Steuerungseinrichtung und/oder Bordelektronik gemäß einem der Ansprüche 14 oder 15 das Verfahren nach einem der vorherigen Ansprüche ausführt.

14. Steuerungseinrichtung und/oder Bordelektronik für eine landwirtschaftliche Verteilmaschine (10), insbesondere für eine Sämaschine, umfassend Mittel zur Ausführung des Verfahrens nach einem der Ansprüche 1 bis 12 und/oder des Computerprogrammprodukts nach Anspruch 13.

15. Steuerungseinrichtung und/oder Bordelektronik nach Anspruch 14, **dadurch gekennzeichnet, dass** ein Bedienelement (17, 18) zur Aktivierung und/oder Deaktivierung des Aufzeichnungsmodus vorgesehen ist, insbesondere ein hardwareseitig und/oder softwareseitig belegbarer Schalter.

## Claims

1. Method for controlling an agricultural distribution machine (10), in particular seed drill, wherein the distribution machine (10) is intended to deliver an agricultural material to be distributed, in particular seed, on an agricultural surface (11) and wherein field boundaries (13) of the agricultural surface (11) are used as position data for controlling delivery of the material to be distributed, the position data of the field boundaries (13) being captured in a recording mode of a control device of the distribution machine (10), wherein the actual rate of delivery of the agricultural material to be distributed is reduced to zero in the recording mode, preferably by deactivating the actual metering of the material to be distributed,
**characterized in that**
in a working mode of the control device the position data are recorded only if a position signal from the distribution machine means that working, in particular distribution of the material to be distributed, is appropriate, whereas in the recording mode the control device does not check a position signal to record the position data.

2. Method according to Claim 1, **characterized in that** the position data of the field boundaries (13) are recorded and/or stored in the recording mode.

3. Method according to Claim 1 or 2, **characterized in that** the position data of the field boundaries (13) are captured in the recording mode by driving along the field boundaries (13) of the agricultural surface (11).

4. Method according to one of the preceding claims, **characterized in that** the position data of the field boundaries (13) are captured in the recording mode by driving along at least one edge region (14) of the surface to be worked, the edge region (14) in particular being part of the surface to be worked.

5. Method according to one of the preceding claims, **characterized in that** the field boundaries (13) are captured in the recording mode without delivering agricultural material to be distributed.

6. Method according to one of the preceding claims, **characterized in that** the control device is designed to automatically create aisles and in the recording mode the section driven along and/or the captured position data are not taken into consideration for ascertaining the aisles that are subsequently to be created.

7. Method according to one of the preceding claims, **characterized in that** the position data ascertained in the recording mode are stored as field boundaries (13) when the recording mode is deactivated.

8. Method according to one of the preceding claims, **characterized in that** when the recording mode is deactivated the position data ascertained in the recording mode are treated as surface (11) not yet worked and/or as surface (11) yet to be worked.

9. Method according to one of the preceding claims, **characterized in that** the position data ascertained in the recording mode are discarded as surface (11) already worked in order to allow them to be driven over again with the recording mode deactivated to deliver the agricultural material to be distributed.

10. Method according to one of the preceding claims, **characterized in that** in the recording mode at least one reference point for the position data is stipulated, preferably multiple reference points.

11. Method according to one of the preceding claims, **characterized in that** the position data are ascertained in the recording mode by capturing local position signals, in particular RTK signals, and/or satellite-based position signals, in particular GPS signals.

12. Method according to one of the preceding claims, **characterized in that** electronic map data are factored into the ascertainment of the position data in the recording mode.

13. Computer program product comprising instructions causing the control device and/or onboard electronics according to either of Claims 14 and 15 to perform the method according to one of the preceding claims.

14. Control device and/or onboard electronics for an agricultural distribution machine (10), in particular for a seed drill, comprising means for performing the method according to one of Claims 1 to 12 and/or for executing the computer program product according to Claim 13.

15. Control device and/or onboard electronics according to Claim 14, **characterized in that** there is provision for an operator control element (17, 18) for activating and/or deactivating the recording mode, in particular a switch assignable to hardware and/or software.

## Revendications

1. Procédé de commande d'un épandeur agricole (10), en particulier d'une machine de distribution, dans lequel la machine de distribution (10) est prévue pour épandre un produit agricole à épandre, en particulier des semences, sur une surface agricole (11), et dans lequel des limites de champ (13) de la surface agricole (11) sont utilisées en tant que données de position pour commander l'épandage du produit à épandre, dans lequel les données de position des limites de champ (13) sont acquises dans un mode d'enregistrement d'un dispositif de commande de la machine de distribution (10), dans lequel, dans le mode d'enregistrement, le débit d'épandage réel du produit agricole à épandre est réduit à zéro, de préférence par désactivation du dosage réel du produit à épandre,
**caractérisé en ce que**, dans un mode de traitement du dispositif de commande, les données de position ne sont enregistrées que si le traitement, en particulier la distribution du produit à épandre, est indiqué par un signal de position de la machine de distribution, alors que, dans le mode d'enregistrement, aucun signal de position n'est demandé par le dispositif de commande pour enregistrer les données de position.

2. Procédé selon la revendication 1, **caractérisé en ce que** les données de position des limites de champ (13) sont enregistrées et/ou mémorisées dans le mode d'enregistrement.

3. Procédé selon la revendication 1 ou 2, **caractérisé en ce que** les données de position des limites de champ (13) sont acquises dans le mode d'enregistrement en parcourant les limites de champ (13) de la surface agricole (11).

4. Procédé selon l'une des revendications précédentes, **caractérisé en ce que** les données de position des limites de champ (13) sont acquises dans le mode d'enregistrement en parcourant au moins une zone périphérique (14) de la surface à traiter, dans lequel la zone périphérique (14) est en particulier une partie de la surface à traiter.

5. Procédé selon l'une des revendications précédentes, **caractérisé en ce que** les limites de champ (13) sont acquises dans le mode d'enregistrement en l'absence d'épandage du produit agricole à épandre.

6. Procédé selon l'une des revendications précédentes, **caractérisé en ce que** le dispositif de commande est conçu pour établir automatiquement des jalonnages et, dans le mode d'enregistrement, l'étendue parcourue et/ou les données de position acquises ne sont pas prises en compte lors de la détermination des jalonnages à effectuer ensuite.

7. Procédé selon l'une des revendications précédentes, **caractérisé en ce que** les données de position déterminées dans le mode d'enregistrement sont stockées en tant que limites de champ (13) lorsque le mode d'enregistrement est désactivé.

8. Procédé selon l'une des revendications précédentes, **caractérisé en ce que**, lorsque le mode d'enregistrement est désactivé, les données de position déterminées dans le mode d'enregistrement sont traitées comme étant une surface (11) non encore traitée et/ou comme étant une surface (11) devant encore être traitée.

9. Procédé selon l'une des revendications précédentes, **caractérisé en ce que** les données de position déterminées dans le mode d'enregistrement sont rejetées comme étant une surface déjà traitée (11) afin de permettre un nouveau déplacement lorsque le mode d'enregistrement est désactivé pour épandre le produit agricole à épandre.

10. Procédé selon l'une des revendications précédentes, **caractérisé en ce que**, dans le mode d'enregistrement, on détermine au moins un point de référence des données de position, de préférence une pluralité de points de référence.

11. Procédé selon l'une des revendications précédentes, **caractérisé en ce que** les données de position sont déterminées dans le mode d'enregistrement par acquisition de signaux de position locaux, en particulier de signaux RTK, et/ou de signaux de position satellitaires, en particulier de signaux GPS.

12. Procédé selon l'une des revendications précédentes, **caractérisé en ce que**, dans le mode d'enregistrement, des données cartographiques électroniques sont prises en compte dans la détermination des données de position.

13. Produit de programme informatique comprenant des instructions amenant le dispositif de commande et/ou l'électronique embarquée selon l'une des revendications 14 ou 15 à mettre en oeuvre le procédé selon l'une des revendications précédentes.

14. Dispositif de commande et/ou électronique embarquée pour une machine de distribution agricole (10), en particulier pour une machine à semer, comprenant des moyens permettant de mettre en oeuvre le procédé selon l'une des revendications 1 à 12 et/ou le produit de programme informatique selon la revendication 13.

15. Dispositif de commande et/ou électronique embarquée selon la revendication 14, **caractérisé en ce qu'**il est prévu un élément de commande (17, 18) permettant d'activer et/ou de désactiver le mode d'enregistrement, en particulier un commutateur pouvant être mis en place côté matériel et/ou côté logiciel.
